# EUROPEAN PATENT APPLICATION

(11) **EP 4 543 023 A1**
(43) Date of publication of application: **23.04.2025**
(21) Application number: 23823285.4
(22) Date of filing: 19.06.2023
(51) Int. Cl.: H04N 21/4788

(54) **VIRTUAL GIFT-BASED INTERACTION METHOD, AND RELATED DEVICE**

(30) Priority: 17.06.2022 CN 202210694194
(71) Applicant: Beijing Zitiao Network Technology Co., Ltd., Beijing 100190 (CN)
(72) Inventor: FU, Yuefeng, Beijing 100028 (CN); YE, Cong, Beijing 100028 (CN)
(74) Representative: Dentons UK and Middle East LLP
(86) International application number: PCT/CN2023/100934
(87) International publication number: WO 2023/241719

(57) **Abstract**

Provided in the present disclosure are a virtual gift-based interaction method, and a related device. The method comprises: receiving a first image determined by a user in a virtual gift customized interface of a target livestream; in response to detection of a user instruction for transmitting a virtual gift, acquiring a second image corresponding to the target livestream; on the basis of the first image and the second image, generating a target virtual gift; and transmitting the target virtual gift to a livestream account associated with the target livestream.

## Description

### CROSS-REFERENCING OF RELEVANT APPLICATIONS

The present disclosure claims the priority of Chinese patent application No. 202210694194.4, filed on June 17, 2022, entitled "A virtual gift-based interaction method and a related device", the entire contents of which are incorporated by reference in the present disclosure.

### TECHNICAL FIELD

The present disclosure relates to the technical field of computers, and in particular, to a virtual gift-based interaction method and a related device.

### BACKGROUND

In the current online interaction scenario, a user can choose a favorite virtual gift from the virtual gifts provided by related applications, and give the virtual gift to an online interaction object, thereby achieving the purpose of online gift-giving.

### SUMMARY

In a first aspect, the present disclosure provides A virtual gift-based interaction method, including:
receiving a first image determined by a user in a virtual gift custom interface of a target live-stream room;
in response to detecting a user instruction for sending a virtual gift, acquiring a second image corresponding to the target live-stream room;
generating a target virtual gift based on the first image and the second image; and
sending the target virtual gift to a live-stream room account associated with the target live-stream room.

In a second aspect, the present disclosure provides A virtual gift-based interaction apparatus, including:
a receiving module, configured to receive a first image determined by a user in a virtual gift custom interface of a target live-stream room;
an acquisition module, configured to, in response to detecting a user instruction for sending a virtual gift, acquire a second image corresponding to the target live-stream room;
a custom module, configured to generate a target virtual gift based on the first image and the second image; and
a sending module, configured to send the target virtual gift to a live-stream room account associated with the target live-stream room.

In a third aspect, the present disclosure provides An electronic device, including one or more processors, a memory, and one or more programs, where the one or more programs are stored in the memory and executed by the one or more processors, and the programs include instructions for executing the method described in the first aspect.

In a fourth aspect, the present disclosure provides a non-volatile computer-readable storage medium, containing a computer program, which, when executed by one or more processors, causes the processors to execute the method described in the first aspect.

In a fifth aspect, the present disclosure provides a computer program product, including computer program instructions, which, when run on a computer, cause the computer to execute the method described in the first aspect.

It can be seen from the above that, according to the virtual gift-based interaction method and related device provided by the present disclosure, a live streaming screen of a target live-stream room can be acquired in real time, and virtual gifts can be customized in combination with a first image determined by a user, so that the user's personalized needs are met, thereby improving the user experience.

### BRIEF DESCRIPTION OF THE DRAWINGS

In order to more clearly illustrate the technical solutions in the present disclosure or related technology, the accompanying drawings required for use in the description of the embodiments or related technology will be briefly introduced below. It will be obvious that the accompanying drawings described below are merely embodiments of the present disclosure, and for those of ordinary skill in the art, other accompanying drawings can be obtained based on these accompanying drawings without creative labor.
Fig. 1 is a schematic diagram of a virtual gift-based interaction architecture according to an embodiment of the present disclosure.
Fig. 2 is a schematic diagram of the hardware structure of an exemplary terminal according to an embodiment of the present disclosure.
Fig. 3 is a flow diagram of A virtual gift-based interaction method according to an embodiment of the present disclosure.
Fig. 4 is a schematic diagram of a live streaming interface according to an embodiment of the present disclosure.
Fig. 5 is a schematic diagram of a custom control interface according to an embodiment of the present disclosure.
Fig. 6 is a schematic diagram of a custom interface according to an embodiment of the present disclosure.
Fig. 7 is a schematic diagram of a custom interface for a letter-type virtual gift according to an embodiment of the present disclosure.
Fig. 8 is a schematic diagram of a custom interface for a photo-type virtual gift according to an embodiment of the present disclosure.
Fig. 9 is a schematic diagram of a live streaming interface according to an embodiment of the present disclosure.
Fig. 10 is a schematic diagram of A virtual gift-based interaction apparatus according to an embodiment of the present disclosure.

### DETAILED DESCRIPTION

In order to make the objectives, technical solutions and advantages of the present disclosure more clearly understood, the present disclosure is further described in detail below in combination with specific embodiments and with reference to the accompanying drawings.

It should be noted that, unless otherwise defined, the technical terms or scientific terms used in the embodiments of the present disclosure should have the common meanings understood by persons of ordinary skills in the field to which the present disclosure belongs. "First", "second" and similar words used in the embodiments of the present disclosure do not indicate any order, quantity or importance, but are merely used to distinguish different components. Words such as "include" or "contain" mean that the element or object preceded by the word covers the element or object listed after the word and its equivalents, and does not exclude other elements or objects. Words such as "connecting" or "connected" are not limited to physical or mechanical connections, but may include electrical connections, whether direct or indirect. "Up", "down", "left", "right", etc. are merely used to indicate relative position relationships. When the absolute position of the object being described changes, the relative position relationship may also change accordingly.

Nowadays, people are increasingly giving virtual gifts to interactive partners in online interaction scenarios, but users can merely choose from the virtual gifts provided by interaction applications in the current virtual gift interaction process. However, these available virtual gifts have been formulated and users cannot edit these virtual gifts. Although some interaction methods have improved on this problem to allow users to edit the color of existing virtual gifts, which to a certain extent has alleviated the problem that virtual gifts cannot be edited by users, simply editing a single dimension still cannot meet users' needs for personalized customization of virtual gifts, and the interaction method is single. Therefore, how to enrich the interaction of virtual gifts and improve the user experience has become a technical problem that needs to be solved urgently.

In view of this, the embodiments of the present disclosure provide a virtual gift-based interaction method and a related device. A live streaming screen of a target live-stream room can be acquired in real time, and virtual gifts can be customized in combination with a first image determined by a user, so that the user's personalized needs are met, thereby improving the interaction experience of virtual gifts.

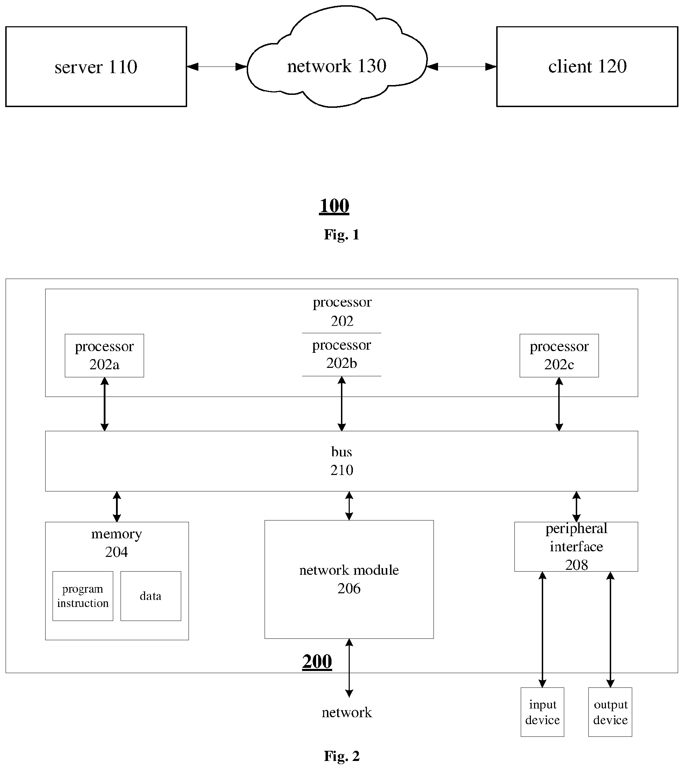

Fig. 1 shows a schematic diagram of a virtual gift-based interaction architecture according to an embodiment of the present disclosure. Referring to Fig. 1, the virtual gift-based interaction architecture 100 may include a server 110, a terminal 120, and a network 130 providing a communication link. The server 110 and the terminal 120 may be connected via the wired or wireless network 130. The server 110 may be an independent physical server, or a server cluster composed of a plurality of physical servers or a distributed system, or a cloud server that provides basic cloud computing services such as cloud services, cloud databases, cloud computing, cloud functions, cloud storage, network services, cloud communications, and middleware services CDN.

The terminal 120 may be implemented in hardware or software. For example, when implemented in hardware, the terminal 120 may be various electronic devices with a display screen and supporting page display, including but not limited to smart phones, tablets, e-book readers, laptops, desktop computers, etc. When implemented in software, the terminal 120 may be installed in the electronic devices listed above, and may be implemented as a plurality of software or software modules (e.g., software or software modules configured to provide distributed services), or be implemented as a single software or software module, which is not specifically limited here.

It should be noted that the virtual gift-based interaction method provided by an embodiment of the present application can be executed by the terminal 120 or by the server 110. It should be understood that the numbers of terminals, networks and servers in Fig. 1 are merely illustrative and are not intended to be limiting. Depending on the implementation requirements, there can be any number of terminals, networks, and servers.

Fig. 2 shows a schematic diagram of the hardware structure of an exemplary electronic device provided by an embodiment of the present disclosure. As shown in Fig. 2, An electronic device 200 may include a processor 202, a memory 204, a network module 206, a peripheral interface 208, and a bus 210. The processor 202, the memory 204, the network module 206 and the peripheral interface 208 are communicatively connected to each other inside the electronic device 200 via the bus 210.

The processor 202 may be a central processing unit (CPU), an image processor, a neural processing unit (NPU), a micro control unit (MCU), a programmable logic device, a digital signal processor (DSP), an application specific integrated circuit (ASIC), or one or more integrated circuits. The processor 202 may be configured to perform functions related to the techniques described in the present disclosure. In some embodiments, the processor 202 may also include a plurality of processors integrated into a single logical component. For example, as shown in Fig. 2, the processor 202 may include a plurality of processors 202a, 202b, and 202c.

The memory 204 may be configured to store data (e.g., instructions, computer code, etc.). As shown in Fig. 2, the data stored in the memory 204 may include program instructions (e.g., program instructions for implementing a prediction confidence assessment method of a model of the embodiments of the present disclosure) and data to be processed (for example, the memory may store configuration files of other modules, etc.). The processor 202 may also access program instructions and data stored in the memory 204 and execute program instructions to operate on the data to be processed. The memory 204 may include a volatile storage device or a non-volatile storage device. In some embodiments, the memory 204 may include a random access memory (RAM), a read-only memory (ROM), an optical disk, a magnetic disk, a hard disk, a solid-state drive (SSD), a flash memory, a memory stick, etc.

The network interface 206 may be configured to provide the electronic device 200 with communications with other external devices via a network. The network may be any wired or wireless network capable of transmitting and receiving data. For example, the network may be a wired network, a local wireless network (e.g., Bluetooth, WiFi, near field communication (NFC), etc.), a cellular network, the Internet, or a combination thereof. It is to be understood that the types of networks are not limited to the above specific examples. In some embodiments, the network module 106 may include any number of network interface controllers (NICs), radio frequency modules, transceivers, modems, routers, gateways, adapters, cellular network chips, etc. in any combination.

The peripheral interface 208 may be configured to connect the electronic device 200 to one or more peripheral apparatuses, so as to enable information input and output. For example, the peripheral apparatuses may include input devices such as a keyboard, a mouse, a touch pad, a touch screen, a microphone, and various sensors, as well as output devices such as a display, a speaker, a vibrator, and an indicator light.

The bus 210 may be configured to transmit information between various components of the electronic device 200 (e.g., the processor 202, the memory 204, the network interface 206, and the peripheral interface 208), such as an internal bus (e.g., a processor-memory bus), and an external bus (a USB port, a PCI-E bus).

It should be noted that although the architecture of the above electronic device 200 merely shows the processor 202, the memory 204, the network interface 206, the peripheral interface 208 and the bus 210, in the specific implementation process, the architecture of the electronic device 200 may also include other components necessary for normal operation. In addition, those skilled in the art may understand that the architecture of the above electronic device 200 may merely contain components necessary to implement the solutions of the embodiments of the present disclosure, and does not necessarily contain all the components shown in the figures.

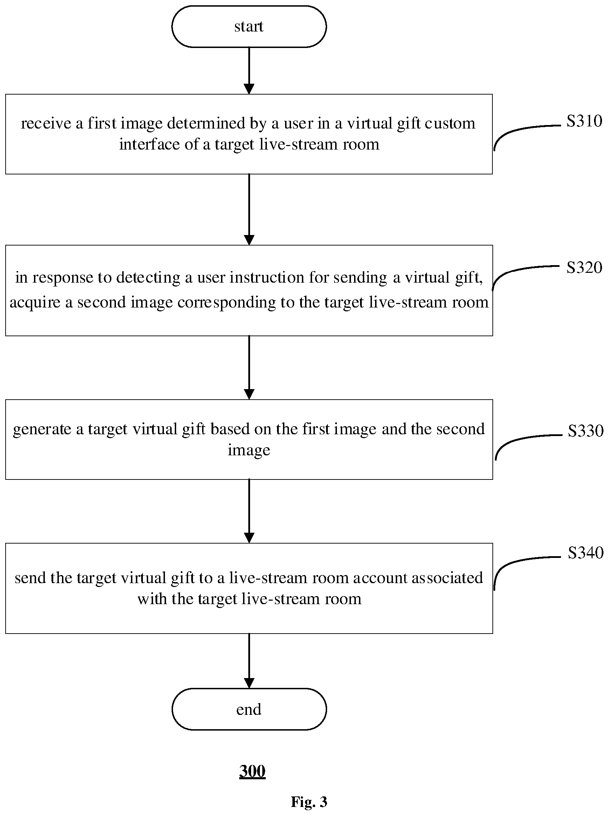

Fig. 3 shows a flow diagram of A virtual gift-based interaction method provided by an embodiment of the present disclosure. The method 300 may be used to implement virtual gift-based interaction, and may be implemented by the server 110 or the terminal 120 in Fig. 1, or be implemented by both the server 110 and the terminal 120. As shown in Fig. 3, the virtual gift-based interaction method 300 may further include the following steps.

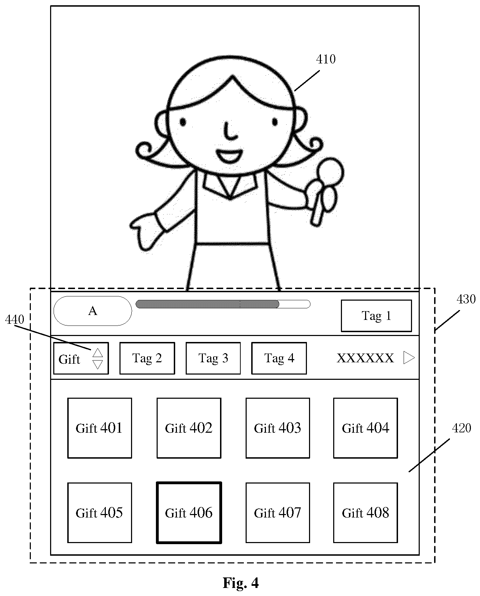

A user can enter, through an interaction application, an interaction scenario (e.g., a target live-stream room) for real-time interaction with a target object, and interact with the target object (e.g., an anchor) in the live streaming interface in the interaction scenario. Referring to Fig. 4, Fig. 4 shows a schematic diagram of a live streaming interface according to an embodiment of the present disclosure. In Fig. 4, a target object 410 is live streaming in the live streaming interface. The interaction application may provide the user with a gift interface 430 including a virtual gift list 420. The gift interface 430 can be hidden, and is displayed when a corresponding preset gift control is triggered. The virtual gift list 420 includes a plurality of virtual gift tags (e.g., gift 401 to gift 408), and each virtual gift tag indicates the type of the corresponding virtual gift.

The user can select from the plurality of virtual gift tags. If the virtual gift tags displayed in the current virtual gift list 420 do not contain the one the user wants to select, the virtual gift tags in the virtual gift list 420 can be changed through a control 440 (for example, turning the page up or down).

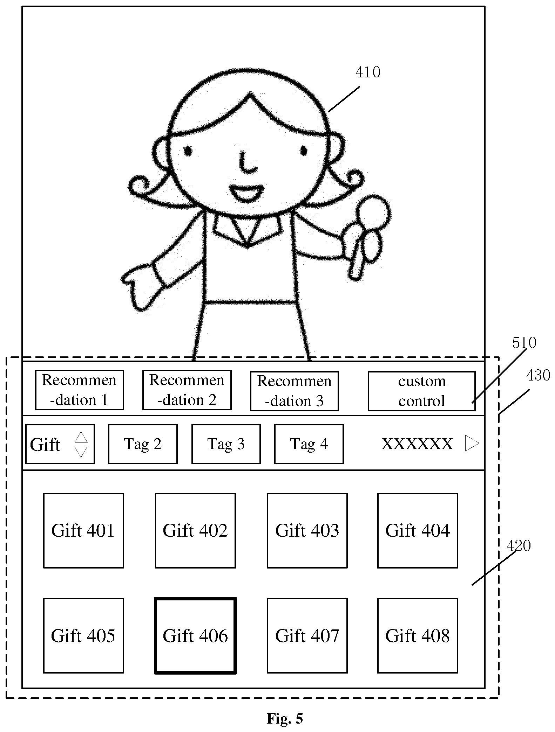

After the user selects (e.g., clicks on) a target virtual gift tag, e.g., "gift 406", as shown in Fig. 5, a virtual gift custom control can be displayed in the gift interface 430. Fig. 5 shows a schematic diagram of a custom control interface according to an embodiment of the present disclosure. In Fig. 5, a custom control 510 may be configured to perform custom drawing on the virtual gift corresponding to the virtual gift tag (e.g., "gift 406") selected by the user in the virtual gift list 420. At this time, recommended virtual gifts (e.g., recommendation 1 to recommendation 3) for the virtual gift tag selected by the user may also be displayed in the gift interface 430. The recommended virtual gifts may have been made by the interaction application, that is, historical target virtual gifts that have been sent. The user can select a target virtual gift from the recommended virtual gifts and send the target virtual gift directly to a target object (e.g., target object 410), for convenient and quick interaction of the virtual gifts.

According to an embodiment of the present disclosure, a user can customize to generate a target virtual gift according to his/her own needs, and send the target virtual gift to a target object. The user may trigger the custom control 510 of the virtual gift tags (e.g., "gift 407" in Fig. 4), so as to enter the custom interface of the corresponding virtual gift.

In some embodiments, the method 300 may include: in response to detecting a first operation of a user on a custom control of virtual gift tags, displaying a custom interface corresponding to the virtual gift tags, where the virtual gift tags are configured to indicate types of virtual gifts.

Virtual gifts may include different element objects, and types of virtual gifts may be determined based on the element objects in the virtual gifts. For example, virtual gifts with the same element object can be treated as the same type. Specifically, types of virtual gifts include but are not limited to: letter-type virtual gifts, photo-type virtual gifts, or item-type virtual gifts. Letter-type virtual gifts may all include the same element object, which is an envelope image; photo-type virtual gifts may all include the same element object, which is a photo frame image; item-type virtual gifts may all include the same element object, which is an item image. Furthermore, different virtual gift tags may be configured to represent different types of virtual gifts. For example, in Fig. 4, the virtual gift tag "gift 406" may be configured to represent a letter-type virtual gift; the virtual gift tag "gift 407" may be configured to represent a photo-type virtual gift; the virtual gift tag "gift 408" may be configured to represent an item-type virtual gift.

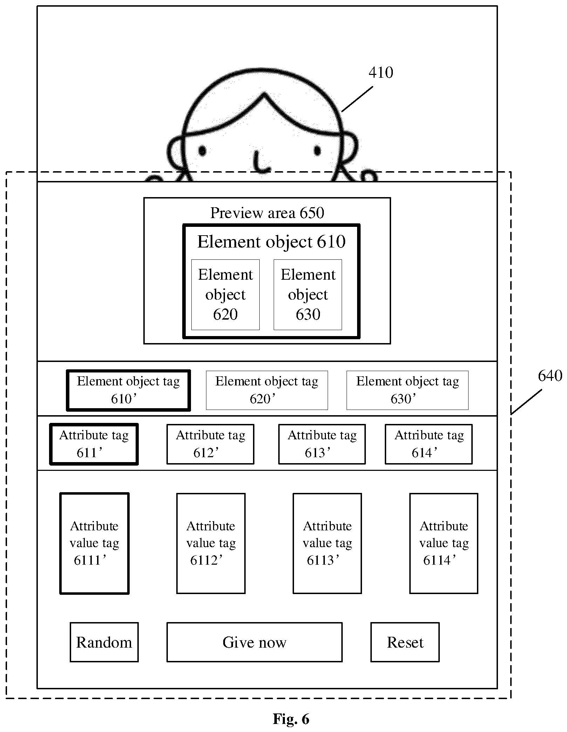

Referring to Fig. 6, Fig. 6 shows a schematic diagram of a custom interface according to an embodiment of the present disclosure. In Fig. 6, a custom interface 640 includes element object tags 610'-630' of at least one element object 610-630, where the element object 610 corresponds to the element object tag 610', the element object 620 corresponds to the element object tag 620', and the element object 630 corresponds to the element object tag 630'. Each element object includes at least one attribute, and the custom interface 640 also includes an attribute tag for each attribute. For example, a plurality of attributes of the element object 610 correspond to attribute tags 611'-614', respectively. Each attribute includes at least one attribute value, and the custom interface 640 also includes an attribute value tag for each attribute value. For example, the attribute corresponding to the attribute tag 611' may include attribute value tags 6111'-6113'.

In one embodiment, the custom interface 640 also includes a preview area 650 for virtual gifts. For example, the preview area 650 may include a plurality of element objects 610-630. When being an audio object, an element object may not be displayed in the preview area 650, or may be displayed in the preview area 650 by using an audio tag of the audio object. The audio tag may be configured to indicate the presence of an audio object, and/or to play the audio object when a user triggers the audio tag. In this way, the user can directly view, through the preview area 650, the customizing effect of the virtual gift when customizing a virtual gift, so as to judge whether the customized virtual gift meets his/her own personalized needs, as well as to facilitate the user to make adjustments.

In an embodiment of the present disclosure, the custom interface 640 may also include a first control configured to randomly determine an attribute value, such as the control "random" in Fig. 6. The custom interface 640 may also include a second control configured to reset an attribute value, such as the control "reset" in Fig. 6. The custom interface 640 may also include a gift sending control configured to send a currently made virtual gift, such as the control "give now" in Fig. 6.

It should be understood that the above virtual gifts and custom interfaces are merely examples and are not intended to be limiting. Virtual gifts and custom interfaces may also include a greater or lesser number of element objects, attributes, and attribute values, which is not limited here.

In some embodiments, the method 300 may include: receiving at least one element object determined by a user in the custom interface, and attribute values of a plurality of attributes of the element object, where types of the at least one element object include at least one of an image object, a text object, or an audio object.

To determine element objects and attribute values of attributes thereof in the custom interface, the user can choose from preset element objects, preset attributes and preset attribute values provided in the interaction application; the user can also locally upload or remotely acquire (e.g., download from the network) element objects; the user can also draw element objects in real time, and determine attribute values of attributes thereof based on the element objects drawn by the user in real time, that is, the original data drawn by the user in real time is directly used as element objects, thereby providing the user with a more flexible personalized customization space, meeting diverse needs of the user, and further enhancing the interaction experience of virtual gifts.

In some embodiments, receiving at least one element object determined by a user in the custom interface includes: receiving the element object determined by the user from preset element objects; or receiving the element object generated by the user in real time. The element object generated by the user in real time may be either uploaded by the user in real time or drawn in real time.

In some embodiments, receiving attribute values of a plurality of attributes of the element object determined by the user in the custom interface includes: receiving attribute values of a plurality of attributes of the element object determined by the user from preset attribute values of each of the attributes.

In some embodiments, receiving attribute values of a plurality of attributes of the element object determined by the user in the custom interface includes: receiving the element object generated by the user in real time, so as to determine attribute values of a plurality of attributes of the element object.

Specifically, as shown in Fig. 6, an element object A corresponding to the element object tag 610' may be a preset element object. After selecting a virtual gift tag, the user triggers the custom control to enter the custom interface, and the tag of the preset element object corresponding to the virtual gift tag can be displayed for the user to select. When the user selects the element object tag 610', the attribute tags 611'-614' of the attribute A-1 are displayed in the custom interface 640; when the user selects the attribute tag 611', the attribute value tags 6111' -6114' are displayed in the custom interface 640, and the user can determine the attribute value of the attribute A-1 of the element object A from the attribute value tags 6111'-6114'. Similarly, other element objects or attribute values of other attributes may be determined. Then, the user can select the attribute value of each attribute of each element object in the custom interface 640, and display the attribute value in the preview area 650 accordingly. Specifically, each time the user determines the attribute value of an attribute, the preview area 650 displays changes in the attribute of the element object accordingly.

An element object B corresponding to the element object tag 630' may be an object uploaded by a user (e.g., uploaded locally or acquired from the network) or drawn in real time. For example, the user can perform a first trigger operation (e.g., double-clicking) on the element object tag 630', and a drawing interface can be provided to the user. After inputting an element object C including a plurality of attributes in the drawing interface such that the attribute values of each attribute of the element object C are also determined accordingly, the user can exit the drawing interface and return to the custom interface 640. At this time, the user can perform a second trigger operation (e.g., single-clicking) on the element object tag 630', and the element object C input by the user can be displayed in the preview area 650, thereby breaking through the limitations on the number and style of preset element objects, allowing users to freely create virtual gifts, and further increasing the playability of virtual gifts. At this time, for the element object C that has been generated, the user can perform the first trigger operation on the element object tag 630' again, and then can enter the drawing interface again to modify or update the element object C.

In some embodiments, a target virtual gift is generated based on the element object and attribute values of the plurality of attributes of the element object.

According to an embodiment of the present disclosure, element objects of the same type or different types and a plurality of attributes thereof can all be combined to form virtual gifts. One or more element objects of any one of image objects, text objects, and audio objects can be combined. For example, a combination of an image object and a text object, a combination of at least two image objects, a plurality of attributes of a single image, etc. can all form virtual gifts. Compared with the current single-dimensional interaction method that only the color of virtual gifts can be modified, the virtual gifts according to the embodiments of the present disclosure can be customized based on a plurality of dimensions in a more flexible and open manner, which enriches the interaction process of online interaction scenarios and can increase the playability of virtual gifts and user stickiness.

In some embodiments, the target virtual gift includes a first image object and a first text object that is located in a first designated area in the first image object.

The first image object includes a letter paper image, and a plurality of attributes of the letter paper image include a plurality of a letter paper shape, a letter paper color, a letter paper pattern, an unfolding animation, an unfolding sound effect, a folding animation, or a folding sound effect.

The first text object includes text content, and a plurality of attributes of the text content include a plurality of a text font, a text color, text content, or an appearance mode.

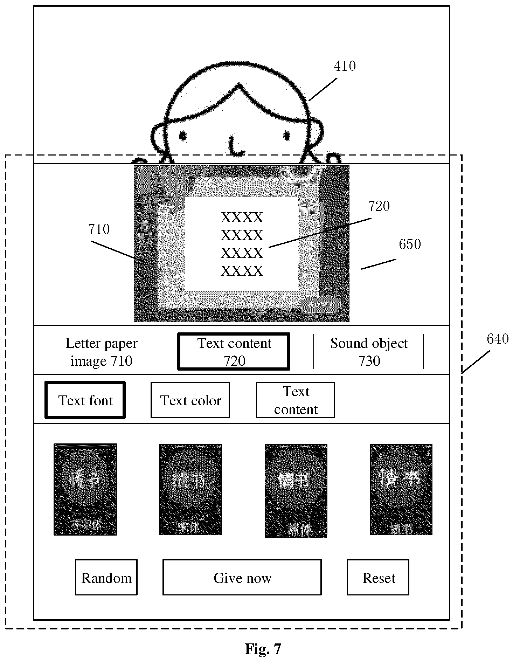

Letter-type virtual gifts may include a combination of image objects and text objects. The first designated area may be a preset area, or an area designated by the user. As shown in Fig. 7, Fig. 7 shows a schematic diagram of a custom interface for a letter-type virtual gift according to an embodiment of the present disclosure. In Fig. 7, the preview area 650 may display the effect of letter-type virtual gifts which include the first image object and the first text object. The first image object includes a letter paper image 710, and the user can customize the letter paper image 710 in a plurality of dimensions respectively according to the attributes of the letter paper image 710. For example, the attribute values of the shape of a letter paper may include rectangle, square, heart, circle, etc.; the attribute values of the edge of the letter paper may include lace, straight line, etc.; the attribute values of the color of the letter paper may include red, yellow, white, green, etc.; the attribute values of the pattern attributes of the letter paper may include a variety of different typesetting styles and/or patterns; the attribute values of the unfolding/folding animation may include a variety of different animations of unfolding/folding the letter paper; the attribute values of the unfolding/folding sound effect may include a variety of audios of unfolding/folding the letter paper. It can be seen that users can customize letter paper images from a plurality of different dimensions of attributes, which increases the playability of virtual gifts and can meet the personalized needs of users. The attributes of a first text object 720 include a text font, a text color, text content or an appearance mode. The text font includes but is not limited to handwriting, Song typeface, bold, clerical script, etc.; the text color includes a variety of different colors; the text content may be preset text content; the appearance mode includes but is not limited to full appearance, line by line appearance or word by word appearance, etc. The user can generate a letter-type virtual gift as the target virtual gift by selecting corresponding attribute values for at least one attribute of the letter paper image 710 and the first text object 720 (an attribute not selected may be a default attribute value).

The user can also generate the first image object and/or the first text object in real time. The user can draw an envelope image through the drawing panel, or directly upload an image from the local storage as the envelope image, or download an image from the network as the envelope image. Meanwhile, the user can input text objects through input devices. For example, after triggering a custom operation on the attribute tag "text content" corresponding to the tag "text content 720", the user can input text content through keyboard input or handwriting with a handwriting device, and determine the attribute values of the two attributes of text font and text color of the input text content based on the attribute tags "text font" and "text color". Furthermore, when the user inputs text content by handwriting with the handwriting device, the handwritten content can also be directly used as the first text object.

In some embodiments, the target virtual gift also includes a first audio object, and a plurality of attributes of the audio object include an audio type and a playback mode, where the attribute values of the audio type include music or human voice, and the playback mode includes synchronous display with the first image object or synchronous display with the first text object.

Specifically, the letter-type virtual gifts in Fig. 7 may also be provided with audio objects, which may not be displayed in the preview area 650, or may be displayed in the preview area 650 through a corresponding identifier. When the attribute value of the music type of the first audio object is music, the music can be played when the letter-type virtual gifts are displayed. The music can be preset music or audio uploaded by the user locally or over the network in real time.

Since the text content of the first text object 720 can appear in many ways and may not appear at the same time as the envelope image 710, the attribute value of the playback mode of the first audio object may be that, when displayed synchronously with the first image object, the first audio object is played while the first image object is displayed; the attribute value of the playback mode of the first sound object may be that, when displayed synchronously with the first text object, the first audio object is not played when the first image object is displayed but played when the first text object is subsequently displayed.

In some embodiments, the method 300 also includes: performing speech recognition based on the first audio object to obtain the first text object.

When the user generates the first text object in real time, the text content of the first text object can also be obtained through the audio (i.e., the first audio object) input by the user. At this point, the first audio object input by the user is consistent with the text content of the first text object and can be displayed synchronously, that is, the display progress is the same. Thereby, when the letter-type virtual gifts are displayed to the target object, it is as if the user reads the content of letters, which is conducive to truly reflecting the user's feelings and improving the interaction effect of virtual gifts.

In some embodiments, the target virtual gift includes a second image object and a third image object located in a second designated area in the second image object.

The second image object includes a photo frame image, the third image object includes a real-time image of the target object acquired by the user, and a plurality of attributes of the photo frame image include a plurality of a photo frame style, a photo frame color, or a photo frame pattern.

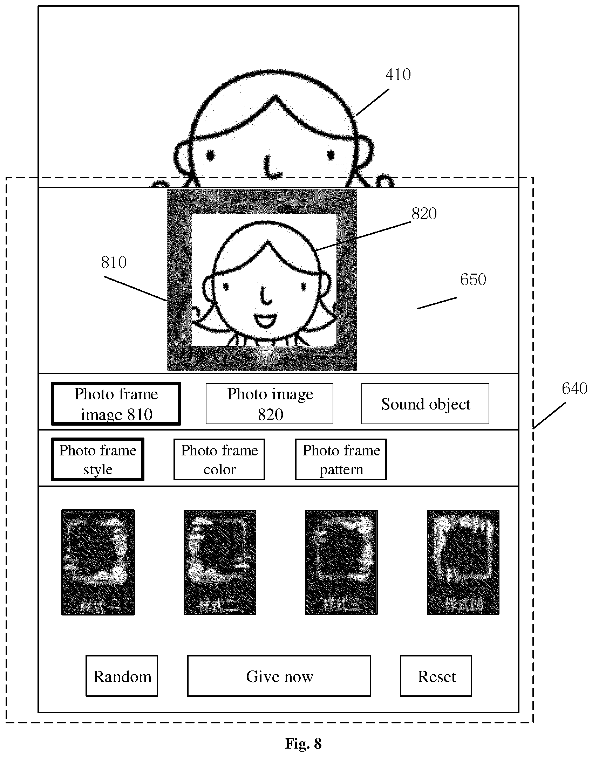

Photo-type virtual gifts may include a combination of a plurality of image objects. The second designated area may be a preset area, or an area designated by the user. As shown in Fig. 8, Fig. 8 shows a schematic diagram of a custom interface for a photo-type virtual gift according to an embodiment of the present disclosure. In Fig. 8, the preview area 650 may display the effect of photo-type virtual gifts which include a second image object 810 and a third image object 820. The second image object 810 may include a photo frame image, and a plurality of attributes of the photo frame image may include a plurality of a photo frame style, a photo frame color, or a photo frame pattern. The attribute values of the photo frame style may include a plurality of photo frame styles of different shapes, the attribute values of the photo frame color may include a plurality of different colors, and the attribute values of the photo frame pattern may include a plurality of different border patterns. The user may also generate the second image object 810 in real time. For example, the user may draw a photo frame image through a drawing panel, or directly upload an image from the local storage as the photo frame image, or download an image from the network as the photo frame image. The third image object 820 may include a real-time image of the target object acquired by the user. For example, the user may take a screenshot from the current live streaming interface to acquire a real-time image of the target object 410 as the third image object. Furthermore, the real-time image can be processed (e.g., cropped, added with special effects) and used as the third image object, thereby increasing the fun of photo frame-type virtual gifts.

In conjunction with Fig. 3, in step S310, a first image (e.g., the second image object 810 in Fig. 8) determined by a user in a virtual gift custom interface (e.g., the custom interface 640 in Fig. 8) of a target live-stream room is received.

In some embodiments, receiving a first image (e.g., the second image object 810 in Fig. 8) determined by a user in a virtual gift custom interface (e.g., the custom interface 640 in Fig. 8) includes:
displaying, in the custom interface (e.g., the custom interface 640 in Fig. 8), at least one attribute (e.g., the photo frame style, photo frame color, and photo frame pattern in Fig. 8) and at least one attribute value (e.g., the attribute values of the photo frame style in Fig. 8 being style 1, style 2, style 3, and style 4) related to the first image;
determining a target attribute value for each of the attributes based on the at least one attribute value;
generating the first image (e.g., the second image object 810 in Fig. 8) based on the target attribute value corresponding to each of the attributes;
or, receiving the first image (e.g., the second image object 810 in Fig. 8) uploaded (e.g., directly uploading an image from the local storage as the photo frame image, or downloading an image from the network as the photo frame image) or drawn (e.g., drawing the photo frame image through a drawing panel) by the user in real time.

At least one attribute value can refer to the attribute value corresponding to one attribute, for example, it can be the attribute value of an attribute in a selected state. As shown in Fig. 8, in which the attribute "photo frame style" is in the selected state, at least one attribute value "style 1, style 2, style 3, style 4" is displayed in the custom interface. When the custom interface is large enough, at least one attribute value may include all attribute values corresponding to all attributes respectively, for example, all attribute values corresponding to all attributes "frame style, frame color, frame pattern" respectively can be displayed. The target attribute value corresponding to each attribute can be determined from the attribute values corresponding to the attributes, thereby generating the first image.

In some embodiments, receiving the first image drawn by the user in real time includes:
in response to detecting a drawing instruction, displaying a drawing panel including a drawing tool control; and
receiving a trajectory drawn by the user using the drawing tool control, so as to generate the first image.

Specifically, the custom interface may also provide a drawing panel to the user, and the drawing panel also provides a plurality of drawing tool controls. The user may use these drawing tool controls to independently draw any image in the drawing panel as the first image, which can not only provide users with more flexible space to customize virtual gifts, but also increase the interaction diversity of customized virtual gifts.

In some embodiments, the first image includes an accessory image, and at least one attribute of the accessory image includes at least one of an accessory style, an accessory color, or an accessory pattern. Specifically, the method of determining the accessory image is similar to that of the photo frame image, and can also be determined by the attribute value of at least one attribute provided by the custom interface, or by real-time uploading or real-time drawing, which will not be repeated here. The accessory image may be an image used to decorate the second image (e.g., the third image object 820 in Fig. 8).

In step S320, in response to detecting a user instruction for sending a virtual gift, a second image (e.g., the third image object 820 in Fig. 8) corresponding to the target live-stream room is acquired.

In step S330, a target virtual gift is generated based on the first image (e.g., the second image object 810 in Fig. 8) and the second image (e.g., the third image object 820 in Fig. 8).

In some embodiments, generating a target virtual gift based on the first image and the second image includes:
acquiring an image (e.g., the third image object 820 in Fig. 8) of a target object in the second image; and
generating a target virtual gift based on the images (e.g., the third image object 820 in Fig. 8) of the target objects in the first image (e.g., the second image object 810 in Fig. 8) and the second image.

Specifically, after acquiring a real-time image of the target live-stream room, target recognition can be performed on the real-time image to determine the target object 410 in the real-time image and the third image object 820 including the target object 410. Then, a target virtual gift can be generated based on the second image object 810 and the third image object 820.

In some embodiments, generating a target virtual gift based on the first image and the second image includes:
determining a target area image of the second image based on the size of a designated area in the first image; and
fusing the target area image into the designated area in the first image, so as to generate the target virtual gift.

In some embodiments, determining a target area image of the second image based on the size of a designated area in the first image includes:
acquiring an image of a target object in the second image; and
based on the size of the designated area in the first image, reducing or enlarging the image including the target object to the size, so as to obtain the target area image.

Specifically, the directly acquired real-time image of the target live-stream room may not match the size of the first image, so that the real-time image needs to be processed such as cropped, and fused with the first image. There may be a designated area in the first image for displaying part of the second image. For example, a middle area in the second image object 810 in Fig. 8 is used to display the third image object 820. The size of the image to be displayed in the designated area can be determined according to the size of the middle area in the second image object 810. For example, the real-time image can be cropped first to retain a portion of the real-time image including the target object 410, and the cropped portion of the real-time image can be enlarged or reduced to a size consistent with that of the middle area in the second image object 810 and then fused into the middle area in the second image object 810, so as to generate a target virtual gift.

In some embodiments, the method 300 also includes:
displaying the target virtual gift in a preview interface;
receiving an adjustment instruction from the user for the target virtual gift, so as to re-determine a second image including the target object;
obtaining a new target area image based on the re-determined second image; and
updating the target virtual gift based on the new target area image.

Specifically, when not satisfied with the target virtual gift displayed in the preview interface 650, the user can adjust the target virtual gift. For example, if not satisfied with the position of the third image object 820 as the target object in Fig. 8, the user can send an adjustment instruction for the target virtual gift through a preset operation (e.g., dragging the image of the third image object 820), so as to re-determine the second image including the third image object 820 as a new target area image (e.g., an image that makes the third image object 820 located in a centered position), and to generate a new target virtual gift based on the re-determined target area image and the second image object.

In some embodiments, the third image object may include a plurality of sub-objects, which include a plurality of different images about the target object. Furthermore, the plurality of sub-objects are arranged in a preset arrangement manner (e.g., an array form, and a radiation form) in the second image object. Furthermore, the positions of the plurality of sub-objects in the second image object are specified by the user. Furthermore, the user can acquire, in the live streaming interface, real-time images of different expressions or different actions of the target object as the sub-objects, thereby increasing the fun and playability of photo-type virtual gifts while meeting the personalized needs of the user.

In some embodiments, the target virtual gift also includes a second audio object, where a plurality of attributes of the second audio object include an audio type and a playback mode. The attribute values of the audio type include music or non-music, and the playback mode includes synchronous display with the target virtual gift.

Specifically, similar to the first audio object of the letter-type virtual gifts, the second audio object of the photo-type virtual gifts may not be displayed in the preview area 650, or may be displayed in the preview area 650 through a corresponding identifier. When the attribute value of the music type of the second audio object is music, the music can be played when the letter-type virtual gifts are displayed. The music may be preset music, or music uploaded by the user in real time locally or over the network. When the attribute value of the music type is non-music, the non-music may be a preset audio effect, such as cheers and applause, and may also be an audio effect uploaded by the user in real time locally or over the network.

In some embodiments, the target virtual gift includes a fourth image object, and a plurality of attributes of the fourth image object include a plurality of a color, a sticker, a prop, a display method, or an overall decoration of the fourth image object.

Item-type virtual gifts may include an image object. The image object includes a plurality of attributes, and the preview area may display the effect of item-type virtual gifts. The item-type virtual gifts include a fourth image object, which may be a preset object image, or an object image drawn by the user through a drawing panel, or an object image directly uploaded from the local storage or downloaded from the network. The attribute values of the color of the fourth image object include a plurality of different colors, and the user can change the color of the object in the object image by selecting a different color attribute value. The attribute values of the sticker of the fourth image object may include no sticker and/or a plurality of stickers of different patterns. The user may select stickers of different patterns to be set on or around the fourth image object, and may also select the attribute value of no sticker, so that no sticker is set. The attribute values of the prop of the fourth image object include a plurality of different props, which are associated with the object displayed in the fourth image object. For example, when the object is a car, the attribute values of the prop may include a plurality of different runways; when the object is a flower, the attribute values of the prop may include a plurality of different vases. The attribute values of the display method for the fourth image object include a plurality of different animation effects and/or audio effects about the object. For example, when the object is a car, the animation effects may include but are not limited to driving from far to near, driving from near to far, or flashing lights. The audio effects may include but are not limited to brake sounds, horn sounds, and motor sounds. The attribute values of the overall decoration of the fourth image object include a plurality of different overall decoration shapes of the object.

In some embodiments, the target virtual gift may also have value attributes, such as virtual resources. When the target virtual gift is sent to the target object, the value attributes of the target virtual gift will be transferred to the target object accordingly, and the target object can obtain the virtual resources corresponding to the virtual gift. Furthermore, in some embodiments, the method also includes: determining the value attributes based on the numerical value of the virtual resources input by the user.

In Step S340, the target virtual gift is sent to a live-stream room account associated with the target live-stream room.

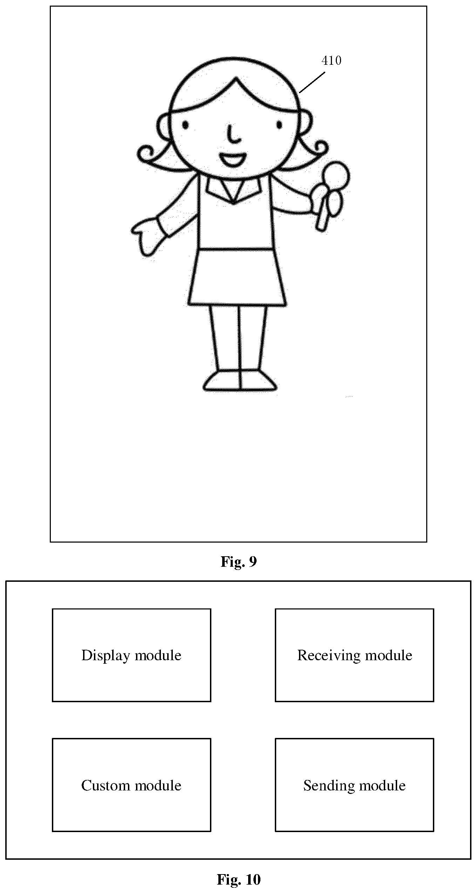

The live-stream room account associated with the target live-stream room may include the live-stream room account of the target live-stream room, and may also include the live-stream room account corresponding to any anchor participating in the live streaming in the target live-stream room. Specifically, the user can trigger the sending control, so as to send the target virtual gift to a target object (e.g., the target object 410 in Fig. 9) in the interaction scenario via the network in an online or offline manner. For example, the anchor who carries out live streaming in the target live-stream room belongs to the target live-stream room, and the target virtual gift may be sent to the live-stream room account corresponding to the target live-stream room. The anchor who carries out live streaming in the target live-stream room may not belong to the target live-stream room, and the target virtual gift may also be sent to the live streaming account corresponding to the anchor. When there are a plurality of anchors in the target live-stream room, some anchors belong to the target live-stream room, and some do not belong to the target live-stream room. A target anchor can be determined by the user from the plurality of anchors, and then the target virtual gift is sent to the live-stream room account corresponding to the target anchor. After the target virtual gift is sent, the custom interface 640 can be hidden and automatically return to the live streaming interface. As shown in Fig. 9, Fig. 9 shows a schematic diagram of a live streaming interface according to an embodiment of the present disclosure. In Fig. 9, after the user sends the target virtual gift to the target object 410, the custom interface 640 is hidden. Furthermore, a gift giving animation of the target virtual gift being sent to the target object 410 may be displayed in the live streaming interface, so that the transition of the target virtual gift from being sent to arriving at the target object is achieved, thereby improving the user's interaction experience.

In some embodiments, after sending the target virtual gift to a live-stream room account of the target live-stream room, the method 300 may also include:
displaying, in the custom interface, a recommended gift tag of the target virtual gift; and
in response to detecting a trigger operation by the user on the recommended gift tag, sending the target virtual gift to the live-stream room account of the target live-stream room.

After the user sends the customized target virtual gift, if a virtual gift also needs to be sent in the current interaction scenario or other interaction scenarios, the latest sent target virtual gift in historical virtual gifts of the same type can be displayed to the user as a recommendation, which facilitates the user to interact with virtual gifts quickly and conveniently, thereby improving the efficiency and effectiveness of interaction. For example, as shown in Fig. 5, when the user operates (e.g., clicks on) the virtual gift tag "gift 406" again, the recommended gift tag "recommendation 1" displayed in the gift interface 430 may represent the latest sent target virtual gift in the virtual gift type corresponding to "gift 406".

It should be noted that in the method of the embodiment of the present disclosure, the acquired audio data may all be subject to authorization by the owner to allow downloading.

According to the virtual gift-based interaction method according to an embodiment of the present disclosure, the problems that the current virtual gift gameplay and effects are single, the user's personalized customization needs for virtual gifts cannot be met, and the user's interaction experience is reduced can be solved. In the embodiments of the present disclosure, a live streaming screen of a target live-stream room can be acquired in real time, and virtual gifts can be customized in combination with a first image determined by a user, so that the user's personalized needs are met, thereby improving the user's interaction experience.

It should be noted that the method provided by an embodiment of the present disclosure may be executed by a single device, such as a computer or a server. The method of this embodiment may also be applied in a distributed scenario and completed by a plurality of devices cooperating with each other. In the case of such a distributed scenario, one of the plurality of devices may merely execute one or more steps in the method of the embodiment of the present disclosure, and the plurality of devices will interact with each other to complete the method.

It should be noted that the above describes some embodiments of the present disclosure. Other embodiments are within the scope of the appended claims. In some cases, the actions or steps recited in the claims may be performed in an order different from that in the above embodiments and still achieve desirable results. In addition, the processes depicted in the accompanying drawings do not necessarily require the particular order shown or sequential order to achieve desirable results. In certain implementations, multitasking and parallel processing are also possible or may be advantageous.

On the basis of the same inventive concept, corresponding to any of the above embodiment methods, the present disclosure also provides A virtual gift-based interaction apparatus.

Referring to Fig. 10, the virtual gift-based interaction apparatus includes:
a receiving module, configured to receive a first image determined by a user in a virtual gift custom interface of a target live-stream room;
an acquisition module, configured to, in response to detecting a user instruction for sending a virtual gift, acquire a second image corresponding to the target live-stream room;
a custom module, configured to generate a target virtual gift based on the first image and the second image; and
a sending module, configured to send the target virtual gift to a live-stream room account associated with the target live-stream room.

For ease of description, the above apparatus is described in various modules according to their functions. Certainly, when implementing the present disclosure, the functions of each module can be implemented in the same or a plurality of software and/or hardware.

The apparatus of the above embodiment is configured to implement the corresponding virtual gift-based interaction method in any of the above embodiments, and has the beneficial effects of the corresponding method embodiments, which will not be repeated here.

On the basis of the same inventive concept, corresponding to any of the above embodiment methods, the present disclosure also provides a non-transitory computer-readable storage medium, which stores computer instructions configured to cause a computer to execute the virtual gift-based interaction method as described in any of the above embodiments.

The computer-readable medium of this embodiment includes permanent and non-permanent, removable and non-removable media, and information storage can be implemented by any method or technology. The information may be computer-readable instructions, data structures, program modules or other data. Examples of the computer storage medium include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technology, a compact disk-read-only memory (CD-ROM), a digital versatile disk (DVD) or other optical storage, a magnetic cassette, a magnetic tape magnetic disk storage or other magnetic storage device, or any other non-transmission medium that can be configured to store information that can be accessed by a computing device.

The computer instructions stored in the storage medium of the above embodiment are configured to cause the computer to execute the virtual gift-based interaction method as described in any of the above embodiments, and have the beneficial effects of the corresponding method embodiments, which will not be repeated here.

Those of ordinary skilled in the art should understand that the discussion of any of the above embodiments is merely illustrative and is not intended to imply that the scope of the present disclosure (including the claims) is limited to these examples. Based on the concept of the present disclosure, the technical features in the above embodiments or different embodiments may also be combined, the steps may be implemented in any order, and there are many other variations of different aspects of the embodiments of the present disclosure as described above, which variations are not provided in detail for the sake of simplicity.

In addition, to simplify illustration and discussion and not to obscure the embodiments of the present disclosure, well known power/ground connections to integrated circuit (IC) chips and other components may or may not be shown within the provided accompanying drawings. Furthermore, the apparatuses may be shown in the form of block diagrams so as to avoid obscuring the embodiments of the present disclosure, also taking into account the following fact that details regarding the implementations of these block diagram apparatuses are highly dependent on the platform on which the embodiments of the present disclosure are to be implemented (i.e., these details should be fully within the scope of understanding of those skilled in the art). In the case that specific details (e.g., circuits) are set forth to describe exemplary embodiments of the present disclosure, it will be apparent to those skilled in the art that the embodiments of the present disclosure may be implemented without these specific details or with variations of these specific details. Accordingly, these descriptions should be considered illustrative and not limiting.

Although the present disclosure has been described in conjunction with specific embodiments of the present disclosure, many substitutions, modifications, and variations of these embodiments will be apparent to those of ordinary skill in the art in light of the preceding description. For example, other memory architectures (e.g., dynamic RAM (DRAM)) may use the discussed embodiments.

The embodiments of the present disclosure are intended to cover all such substitutions, modifications, and variations that fall within the broad scope of the appended claims. Accordingly, any omissions, modifications, equivalent substitutions, improvements, etc. made within the spirit and principles of the embodiments of the present disclosure shall be included within the scope of protection of the present disclosure.

## Claims

1. A virtual gift-based interaction method, comprising:
receiving a first image determined by a user in a virtual gift custom interface of a target live-stream room;
in response to detecting a user instruction for sending a virtual gift, acquiring a second image corresponding to the target live-stream room;
generating a target virtual gift based on the first image and the second image; and
sending the target virtual gift to a live-stream room account associated with the target live-stream room.

2. The method according to claim 1, wherein receiving a first image determined by a user in a virtual gift custom interface comprising:
displaying, in the custom interface, at least one attribute and at least one attribute value related to the first image;
determining a target attribute value for each of the attributes based on the at least one attribute value;
generating the first image based on the target attribute value corresponding to each of the attributes;
or, receiving the first image uploaded or drawn by the user in real time.

3. The method according to claim 2, wherein receiving the first image drawn by the user in real time comprising:
in response to detecting a drawing instruction, displaying a drawing panel comprising a drawing tool control; and
receiving a trajectory drawn by the user using the drawing tool control, so as to generate the first image.

4. The method according to claim 2, wherein the first image comprising a photo frame image, and at least one attribute of the photo frame image comprising at least one of a photo frame style, a photo frame color, or a photo frame pattern;
or, the first image comprising an accessory image, and at least one attribute of the accessory image comprising at least one of an accessory style, an accessory color, or an accessory pattern.

5. The method according to claim 1, wherein generating a target virtual gift based on the first image and the second image comprising:
determining a target area image of the second image based on the size of a designated area in the first image; and
fusing the target area image into the designated area in the first image, so as to generate the target virtual gift.

6. The method according to claim 5, wherein determining a target area image of the second image based on the size of a designated area in the first image comprising:
acquiring an image of a target object in the second image; and
based on the size of the designated area in the first image, reducing or enlarging the image comprising the target object to the size, so as to obtain the target area image.

7. The method according to claim 1, wherein generating a target virtual gift based on the first image and the second image comprising:
acquiring the image of the target object in the second image; and
generating a target virtual gift based on the images of the target objects in the first image and the second image.

8. The method according to claim 6, further comprising:
displaying the target virtual gift in a preview interface;
receiving an adjustment instruction from the user for the target virtual gift, so as to re-determine a second image comprising the target object;
obtaining a new target area image based on the re-determined second image; and
updating the target virtual gift based on the new target area image.

9. The method according to claim 1, wherein after sending the target virtual gift to a live-stream room account associated with the target live-stream room, the method further comprises:
displaying, in the custom interface, a recommended gift tag corresponding to the target virtual gift; and
in response to detecting a trigger operation by the user on the recommended gift tag, sending the target virtual gift to the live-stream room account of the target live-stream room.

10. A virtual gift-based interaction apparatus, comprising:
a receiving module, configured to receive a first image determined by a user in a virtual gift custom interface of a target live-stream room;
an acquisition module, configured to, in response to detecting a user instruction for sending a virtual gift, acquire a second image corresponding to the target live-stream room;
a custom module, configured to generate a target virtual gift based on the first image and the second image; and
a sending module, configured to send the target virtual gift to a live-stream room account associated with the target live-stream room.

11. An electronic device, comprising a memory, a processor, and a computer program stored in the memory and executable on the processor, the processor implementing the method according to any one of claims 1 to 9 when executing the program.

12. A non-transitory computer-readable storage medium, storing computer instructions configured to cause a computer to execute the method according to any one of claims 1 to 9.

13. A computer program product, comprising computer program instructions, which, when run on a computer, cause the computer to execute the method according to any one of claims 1 to 9.
